# EUROPEAN PATENT SPECIFICATION

(11) **EP 4 256 552 B1**
(45) Date of publication and mention of the grant of the patent: **15.07.2026**
(21) Application number: 21809993.5
(22) Date of filing: 09.11.2021
(51) Int. Cl.: G10L 15/22, G09B 21/00, G10L 13/00, G06F 3/01

(54) **SYSTEM FOR REPLY GENERATION**
SYSTEM ZUR GENERIERUNG VON ANTWORTEN
SYSTÈME DE GÉNÉRATION DE RÉPONSES

(30) Priority: 04.12.2020 GB 202019138
(43) Date of publication of application: 11.10.2023
(73) Proprietor: Rolls-Royce plc, London N1 9FX (GB)
(72) Inventor: MOSS, Stuart Brian, Derby Derbyshire DE24 8BJ (GB); ALOMARI, Muhannad Abdul Rahman, Derby Derbyshire DE24 8BJ (GB); ARNEY, James Frederick Sebastian, Derby Derbyshire DE24 8BJ (GB)
(74) Representative: Rolls-Royce plc
(86) International application number: PCT/EP2021/081017
(87) International publication number: WO 2022/117291

(56) References cited:
- WO-A1-2006/036328
- US-A1- 2008 154 828
- US-A1- 2013 065 204
- US-B2- 9 679 497
- SOWAH ROBERT ET AL: "Think to Speak - A Piezoelectric-EEG system for Augmentative and Alternative Communication (AAC) using Recurrent Neural Networks", 2019 IEEE INDUSTRY APPLICATIONS SOCIETY ANNUAL MEETING, IEEE, 29 September 2019 (2019-09-29), pages 1 - 6, XP033665163, DOI: 10.1109/IAS.2019.8912419

## Description

### Technical Field

The present disclosure concerns a device for generating conversational replies.

### Background

Motor neurone disease (MND), also known as amyotrophic lateral sclerosis (ALS), occurs when specialist nerve cells in the brain and spinal cord called motor neurones stop working properly. A symptom of this condition is that the patients often lose their ability to speak. The majority of patients retain the use of their eyes and so text to speech with gaze-tracking systems linked to speech synthesis devices are sometimes used to assist communication. These systems can allow the patient to type what they want to say by looking at letters on the screen for a second at a time. This painstakingly slow process makes it very difficult for users to interact in a conversation spontaneously. Other patients with MND with greater mobility, or other conditions that affect the ability to speak, may use other interfaces to select words or phrases for communication. Existing technologies such as predictive text and word prediction help slightly to speed up the situation but there is a need for improvement in communication assisting devices. In addition, existing devices often work in a way that eradicates the subtle verbal cues of human speech which help to indicate personality and emotions. This makes them unacceptable as a device to alleviate the symptoms of motor neurone disease.

US2008/154828A1 describes a method for receiving user input that includes a portion of a user statement; selecting, before receiving a whole user statement, an answerable statement response between an answerable statement, multiple answerable statements and a response to an answerable statement; wherein the selecting is responsive to user input and to structured representations of answerable statements answerable by an answering entity.

In "Think to Speak - A Piezoelectric-EEG system for Augmentative and Alternative Communication (AAC) using Recurrent Neural Networks" 2019, Sowah et al explain that per every valid utterance registered via voice recognition, the Think to Speak system generates three unique and complete sentences (symbols), displays them sequentially on an LCD in order of decreasing confidence values, as determined by the loss function of a neural network.

### Summary of Invention

The invention is defined by the appended claims.

According to a first aspect there is provided a device as claimed in claim 1.

In examples, the speech input module comprises a sound transducer and the speech recognition module comprises a speech to text conversion module. Also the output module may comprise a text to speech converter, which may be configured to produce speech using a voiceprint of the user.

The user input module in some examples comprises a graphical user interface and a gaze tracking input, such that a user can select a response by gazing at a response displayed on the graphical user interface.

The device is particularly useful for the alleviation of symptoms of motor neurone disease.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### Brief Description of Drawings

Embodiments will now be described by way of example only, with reference to the Figures, in which:
**Figure 1** shows an example of the system disclosed herein being used by a patient.
**Figure 2** is an example of the system with a selection of emotional responses.
**Figure 3** shows a diagram of the system modules for producing spoken message replies; and
**Figure 4** shows a flow chart of the training process for a neural network of the system herein disclosed.

### Detailed Description

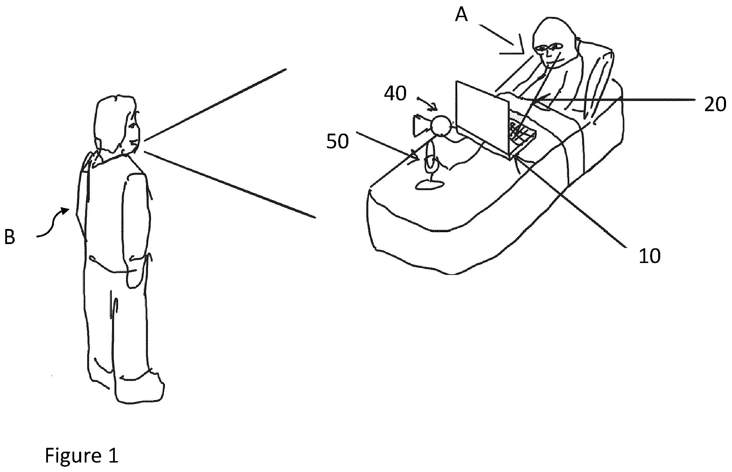

Figure 1 shows the quips system as disclosed herein, in use in a typical situation. User A is typically a person who is unable to easily engage in conversation, for example a sufferer of a degenerative condition such as motor neurone disease (MND) or another condition that reduces speech abilities. User A is listening to a conversation with person B. Quips system 10 is in front of user A, who is looking at the interface module 20. Input module 50, for example a microphone connected to a voice to text module, is providing input to the quips system 10 based on the received conversation from person B. The interface module 20 will be displaying a selection of dynamically created phrases which user A could use as a reply to person B as they feel is appropriate. If user A is unable to use their hands for example, then input module 50 may also comprise a gaze tracking or gesture tracking device which will allow user A to select a phrase from the interface module. Once a phrase has been selected, it can be transmitted to person B via the output module 40, which may be a loudspeaker connected to a text to speech module. The output module may be configured to use a voice profile based on the user own voice, if a recording of that is available to create a voice profile. The system 10 therefore allows user A to engage in natural conversation with person B. This alleviates the speech impairing condition, such as MND, that the user is suffering from.

In particular, quips system 10 comprises a trained Artificial Intelligence (AI), which generates responses to natural language processing (NLP) inputs by providing a variety of suggestions. These suggestions are referred to herein as "quips", in that they can be personalised to the conversational style of the user, and rapidly selected to interject into the conversation if the user chooses. The 'input' part of the conversation is transformed to text that is then routed into the pre-trained AI assistant as described below. The system provides these dynamically generated suggestions for quips that the user might use to respond with. The assistant then uses contextual understanding of the incoming conversation to identify several appropriate responses or 'Quips' (full sentence or paragraph) for the user. These quips may be selected to represent a number of different emotional contexts. The AI generates the Quips from its understanding of the user's prior conversations in their messaging history and/or a training data set based on typical conversations.

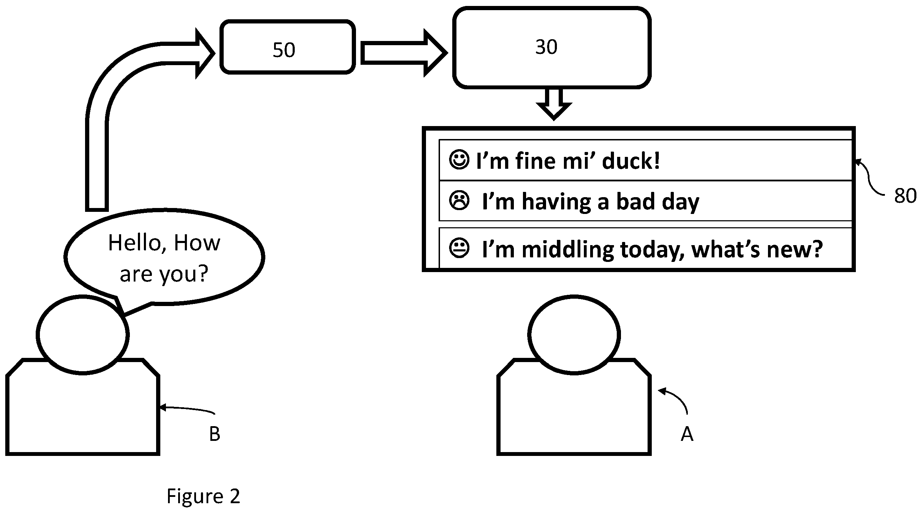

Figure 2 shows person B speaking, and the speech being received by conversation input module 50, receives a sentence or phrase and transmits it to the quips engine 30. Suggested replies are displayed on user interface region 80 as a list of prompts, which user A can select using an input device as replies to person B.

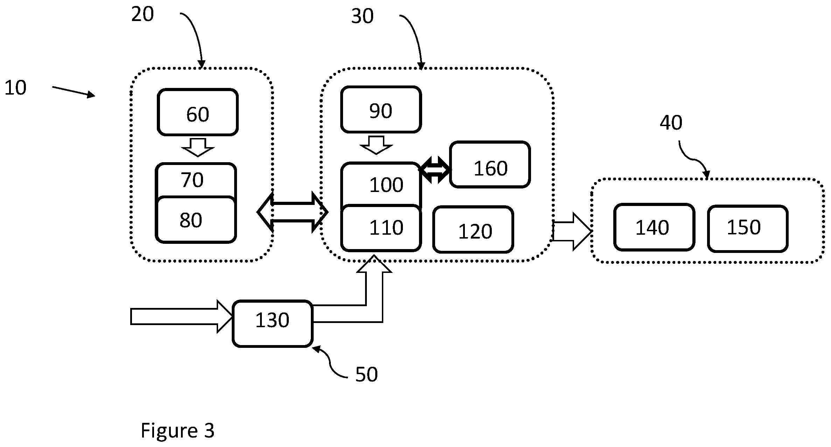

With reference to Figure 3, a system is shown for producing spoken message replies, which are referred to in this disclosure as 'Quips', and the system may therefore be referred to as quips system 10.

Quips system 10 includes a device comprising user interface module 20, quips engine 30, output module 40, conversation input module 50.

User interface module 20 may include: user input module 60, for example an eye tracking input; user interface 70, for example an LCD display or any display capable of displaying text; A selection portion 80 of the user interface is used to display one or more prompts for conversation replies, which allows the user to select one of the prompted replies using the input module 60. The user interface module is communicatively connected to the quips engine 30, so when the quips engine generates quips, e.g. prompts for replies to incoming speech, the prompts can be displayed on the selection portion, and the user interface module can transmit the selected reply back to the quips engine when the user has made a choice from the one or more prompts. In this way the user is able to reply to a phrase during a conversation by rapidly selecting a context appropriate reply from the selection portion. Other portions of the display may be used to permit selection of other methods of text selection, for the user to choose if none of the prompted replies are desired.

Quips engine 30 comprises one or more processors, memory and interfaces, with software modules stored in memory containing stored programmes to implement the methods described herein. The memory includes one or more stored datasets of neural network vectors derived during training of the AI, and user data 90.

The engine 30 includes a Natural Language Processing (NLP) module 100, which includes a processor or shares a processor with other functions, and software to implement NLP analysis of input phrases. The NLP module is trained prior to use by a patient during a training phase. The NLP module may comprise one or more 'Sequence-to-Sequence' models 160. This is a type of generative AI model widely used in Natural Language Processing. The sequence to sequence models actually consist of two distinct models working together; an Encoder network and a Decoder network. For this reason, it is also commonly known as an Encoder-Decoder architecture. An encoder-decoder may be implemented using neural networks.

The input sentence, or 'sequence', is first separated into words, with each word being assigned a number from a large dictionary of words. These numbers are passed into the encoder which outputs a 'context-vector' of numbers (not necessarily of the same length as the input).

During the training phase, it is the job of the encoder to work out a suitable 'context-vector' for each input sentence, such that sentences with similar meaning are close together in the vector representation. In other words the mathematical distance between the vectors is small.

The job of the decoder is to turn the context-vector in to a response sequence. Again, the arrangement of words the decoder lands upon during decoding is the subject of the training phase. If the expected response is not generated, the error or 'loss' is passed back-propagated through the decoder, and the encoder, to train both networks.

Other such language processing architectures such as 'Transformers' may be used for this task rather than the one used in this example, but various types may be interchanged without altering the function of the system.

The memory may be located on the device, or may be located remote from the device, or may be distributed between the device and a location remote from the device. The memory may be any suitable non-transitory computer readable storage medium, data storage device or devices, and may comprise a hard disk and/or solid state memory (such as flash memory). The memory may be permanent non-removable memory, or may be removable memory (such as a universal serial bus (USB) flash drive or a secure digital card). The memory may include: local memory employed during actual execution of the software, e.g. computer program; bulk storage; and cache memories which provide temporary storage of at least some computer readable or computer usable program code to reduce the number of times code may be retrieved from bulk storage during execution of the code.

The software, e.g. computer programs that implement the AI and/or neural networks may be stored on a non-transitory computer readable storage medium. The computer program may be transferred from the non-transitory computer readable storage medium to the memory. The non-transitory computer readable storage medium may be, for example, a USB flash drive, a secure digital (SD) card, an optical disc (such as a compact disc (CD), a digital versatile disc (DVD) or a Blu-ray disc). In some examples, the computer program may be transferred to the memory via a wireless signal or via a wired signal.

Input/output devices may be coupled to the system either directly or through intervening input/output controllers. Various communication adaptors may also be coupled to the controller to enable the apparatus to become coupled to other apparatus or remote printers or storage devices through intervening private or public networks. Non-limiting examples include modems and network adaptors of such communication adaptors.

The user input device may comprise any suitable device for enabling an operator to at least partially control the apparatus. For example, the user input device may comprise one or more of a keyboard, a keypad, a touchpad, a touchscreen display, and a computer mouse instead of or in addition to the eye tracking mentioned elsewhere. The controller is configured to receive signals from the user input device.

The output device may be any suitable device for conveying information to a user. For example, the output device may be a display (such as a liquid crystal display, or a light emitting diode display, or an active matrix organic light emitting diode display, or a thin film transistor display, or a cathode ray tube display), and/or a loudspeaker, and/or a printer (such as an inkjet printer or a laser printer). The controller is arranged to provide a signal to the output device to cause the output device to convey information to the user.

The NLP module is connected to a NLP assistant module, which receives input conversation text from conversational input module 50, selects the options that the NLP module will use, for example emotional categories or conversation style, instructs the NLP module to analyse the input conversation text into input vectors, generate phrases in the NLP module that match the input vectors, and send a selection of the closest matching phrases to the user interface module 20. Upon receiving an indication from the user interface module of a user selection of a phrase, the NLP assistant module outputs the selected phrase to the output module 40.

The engine also may include options module 120, that allows additional optional selections to be applied to the output phrase. For example, the user may wish to select the recipient of the conversation to personalise the responses to the listener. A close friend or partner may have a different AI response set generated, likewise formal conversation will have a different response set to informal conversation.

Output module 40 receives the selected phrase from the quips engine and generates an output of the phrase selected by the user to another person engaged in conversation with the user. In the preferred example, the output module includes a text to speech module 140, and optionally comprises a voice profiler 150. The text to speech module generates phonetic data based on the selected phrase, which may be converted into audible speech by a speech generator, or the optional voice profiler may apply modifications to the phonetic data and apply tone and cadre changes to the phonetic data to generate speech that sounds like the original voice of the user. The voice profiler may also alter the generation of the speech by the output module according to the emotional context of the phrase, or to give emphasis to parts of the phrase according to the user selection.

Output module 40 may optionally comprise a display module to display the selected phrase on a screen so the other person(s) in the conversation can read the selected phrase if they are unable to hear.

The system 10 may also include options to transmit the selected message to another device, e.g. to generate an email or text message.

Conversation input module 50 receives a sentence or phrase and transmits it to the quips engine 30. In a preferred embodiment, the input module comprises an audio interface comprising, for example, a microphone to record conversational speech, and a speech to text module 130. The microphone can be used to listen to a conversation, and generate text inputs representing heard phrases which are transmitted to the quips engine for processing. Speech-To-Text (STT) module 130 receives audio input from e.g. the microphone. This module converts the audio byte into text using speech-to-text algorithms. The text 'string' is passed from the STT module to Quips. Quips receives the string as input to the prediction engine and uses it to determine contextual meaning of the conversation. This is then converted to a number of 'quips', or responses, to the ongoing conversation, that the user may select to reply, or edit beforehand.

In general the disclosure provides a system that allows someone that is unable to talk, for example due to a degenerative condition affecting the speech centres of the brain or the vocal chords or larynx, to communicate with people, using their own words and voice profile matching their personality, and simply and quickly enough to keep pace with a conversation.

### Training data (messaging history)

To create the system, a custom AI software system was developed that learns a user's conversational 'turn of phrase'. To generate training data based on the system user, the users training data may be for example their SMS messaging history, but email history or social media history would be equally relevant. Any textual record of the users own conversational style could be used. In this example we extracted their messaging history from a mobile phone as a comma separated values (CSV) text file. Audio recordings of the user engage in conversation could also be used as a data source by processing the audio using a speech-to text engine.

As highlighted already, often auto-responses lack personalisation. With speech being a key way humans express personality, this is a key factor in restoring speech whilst preserving identity. Personalisation of the responses is achieved through two factors. The first is the source of training data, and the second is editing of the predicted 'quip'.

All models described are trained initially on generic datasets. This is data that is non-personal and typically from a public source. For example, question-answer exchanges or film transcripts. In one example, Quips used a novel source of simple question-answer dialogues from language teaching classes. These are particularly helpful with mundane day-to-day conversation that may not often occur in films or in the comments of question-answer exchanges, for example 'what's the weather like?'. These datasets, being much larger than user specific datasets, help to achieve good quality of responses. The personal aspect of the suggestions is achieved through historical conversational data. As Quips runs, it collects responses from the user and stores them as (protected) personal data. At regular set periods, the model fine-tunes its responses based on this data, such that the longer Quips is used, the better it does at fitting responses to the users' unique speech traits. As an initial 'kick-start', the user may also provide conversational data from other sources, such as SMS or email history, so as to start seeing more tailored responses from the offset. The NLP module may therefore be pretrained to match the user's style of conversation, avoiding an awkward or embarrassing training period when put into use and enabling the user to maintain normal interactions with those around them.

The second opportunity for personalisation is achieved by the ability to edit a selected response before 'speaking' it. The user interface may be used to select words or phrases that the user wishes to change. Quips will then show a list of words that are likely to be good substitutes. For example, selecting 'tea' in the predicted quip 'I'd love a cup of tea', would show a list similar to 'coffee; hot chocolate; water'. The user may also choose to manually edit the response if the desired output is still not shown.

Whatever the output, the changes will be captured by quips and stored in the personalisation dataset. They will therefore have an increased likelihood of showing the next iteration.

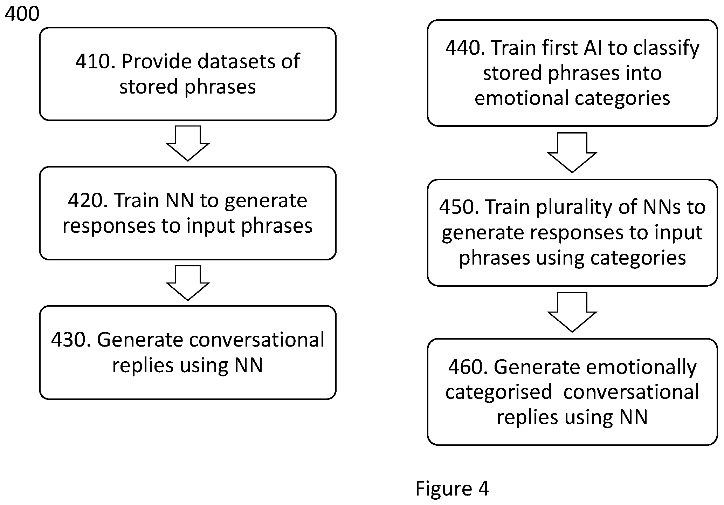

Referring to figure 4, the first step in training the natural language processing module or neural network is to provide a dataset of stored phrases, 410.

The training data as mentioned above includes a large dataset of samples of conversational phrases, linked so as to form prompts and responses. To create this dataset, a large corpus of recorded conversational data was identified. A system was developed that can mine conversations from a corpus of recorded conversational data, e.g. videos of conversations, or other recordings of conversations between two or more people. The system uses a speech to text engine.

One key challenge in mining this corpus is in tagging/finding who is speaking during the conversation, this is also known as speech diarisation. This was an unsolved challenge in the field of AI (especially when the system has never been exposed to that person's voice before). The system uses an algorithm that segments the conversation based on timing with an assumption that only two people are conversing at any time. Using this method, the system has been demonstrated to be able to rapidly extract 10,000 lines of conversation from a large corpus of recordings without the need to train a model on every single voice profile in the recordings.

### AI Engine

Once the system has been trained 420 using the training data it is then able to respond to a variety of inputs by understanding the context. The system need not have previously experienced the exact question or input to be able to generate a response. The engine can infer a response, which is referred to in this disclosure as a 'Quip', and the engine may therefore be called a quip engine, or be part of a quips system. Quips are different from the output of prior art predictive text engines in that they are complete sentences or paragraphs ready to be used as output using a text to speech engine. The Quips engine uniquely provides multiple responses to an input for the user to select from, see Figure 4, 430. This range of responses provide the latitude for the user to direct the flow of the conversation. For example the user maybe be asked 'how are you today?' the quips system would provide a variety of options to that question. Some of the options might be positive like 'I'm good' or 'lots better than yesterday given the circumstances'. The options would also include negative responses like 'this is the worst day I've had in a long time' or 'I'm just not in a good mood today'. The on-screen selection process can be made using a GUI and a variety of computer based pointing methods including touchscreen, switches, mouse or more commonly an eye tracking input (now commonly integrated in to operating system accessibility features in platforms like windows 10).

There are three broad challenges in producing good output from the Quips engine. The first is producing grammatically correct, high quality sentences. The second is producing sentences with enough variation to offer good options to the user. The third is producing sentences that are personalised to each user.

Another challenge and a particular requirement for this disclosure, is the idea of using such a generative architecture to generate multiple responses of different semantic meaning. Although multiple responses are generated in prior art automatic email replies, or similar work used for mobile phone messaging apps for example, each previous architecture focuses on selecting appropriate responses from a bank of predefined sentences, these are therefore also unpersonalised.

Achieving variation in responses from a generative network is a different problem entirely and an idea that has proven very important for this use case. Making the generated conversational prompts tailored to and acceptable to the user is essential for this to be adopted as a replacement for normal speech, for example when the device is used to alleviate the symptoms of MND.

A first method of training the NLP module, was to train multiple encoder-decoder models on subsets of a conversational dataset, pertaining to a particular 'emotion'. To achieve this, the dataset was split into a plurality of emotion types by fine-tuning a first AI, e.g. Google's ^{®} BERT model, to perform emotion classification 440. 7 emotions were chosen here, but the key idea is segregating the dataset into distinct categories, to achieve responses of a certain type from each model. For example, the chosen categories may have simply been 'Happy', 'Sad' and 'Neutral'; or they may have been something entirely different such as 'Informative', 'Empathetic' and 'Funny'.

Once the data has been separated, a distinct encoder-decoder model is trained on each dataset 450. At run-time, the input sentence to Quips is passed through each of the networks, and a response, and a parameter representing the likelihood of the response (probability) matching the input, is received from each of these emotionally trained encoder-decoder models 460. Not all models will have an appropriate response to every input sentence. For example, the output from an 'angry' network from the input phrase, 'Nice to meet you', will likely have a low probability. Quips therefore ranks the responses by their probability score and shows them to the user in the order from highest to lowest. It also has a threshold that must be reached for the response to be shown at all.

A second method involves a single encoder-decoder model that is trained on the entire conversational dataset 420. An advantage is that there is more data available to the model in this method. The model then works in the same way as before, but at the decoder stage, it utilises a method known as 'Beam Searching' to produce multiple sentences from the same model 430. A Beam search is a heuristic search algorithm that explores a graph by expanding the most promising node in a limited set. Where the decoder normally would predict one word at a time, at each step selecting the most likely next word, in beam searching, the top 'n' words are kept and allowed to propagate forwards as separate 'solutions'. This therefore results in multiple sentences being generated at the end of the decoder phase. To prevent exponential growth in the number of sentences being created, a max number of sentences can be set so that once this threshold is hit, only the top 'n' sentences will be kept after each step.

At the end of the decoder phase, a filter is used to reduce the number of sentences shown to the user as options - so as not to confuse or overwhelm. To achieve sparsity in semantic meaning, this filter prioritises sentences that cover a broad semantic range, thus addressing the second challenge.

The two methods can each be used alone, or in combination, with a first set of options for responses being generated by the emotionally trained encoder-decoder models, and a second set being generated by the single encoder-decoder model. The AI Assistant can then rank these options for responses based on parameters generated by the encoder-decoder models, and select the best list of options to present initially to the user. The priority of the ranking order between the different models may be adjusted based on the type of conversation selected by the user, or based on the context of the conversation history inferred from previously selected responses.

### NLP input (speech in)

To generate inputs to the quip system a speech to text module is used, for example Google^{®} Open Source Natural Language Processing (NLP), to transform speech to text. This allows the system to capture the speech from a person that can talk, as a text input for the AI system to respond to on behalf of the user of the system (someone that cannot speak). The engine later represents textual inputs as vectors as a step in the NLP. This is also known as sentence embedding and it allows the engine to deal with continuous features (numbers) as opposed to categorical ones (words).

The system records samples of a conversation and uses the quips engine to generate a vector representing the sematic meaning of the sampled conversation.

The samples may be limited by breaks in the conversation, i.e pauses in speech, or the engine may continually assess the most recent string of identified words to create vectors. The created vectors are then used to search through a database of conversational phrases to identify contextual matches to the incoming conversation.

### User input (selection)

To allow the user of quips to select their chosen response from the options generated by Quips they can use an eye tracking system. Many other selections devices would also be valid such as a mouse, switch or keyboard.

### Voice profile (User voice)

Voice banking is a common technology that uses recording of a person to create a custom voice profile file. In this instance we created a Microsoft SSML file for the user. This file format contains all of the information needed to replicate the various sounds of the users speech pattern. The SSML file was generated using Acapela software.

### Quips Application (The combined system)

Finally, the Quips application is used to combine the above elements into a simple to use system. The trained Artificial Intelligence (AI) Assistant responds to NLP inputs by providing a variety of suggestions. The 'input' part of the conversation is transformed to text that is then routed into the pre-trained AI assistant. The system provides these suggestions for quips that the user might use to respond with. The assistant then uses contextual understanding of the incoming conversation to identify several appropriate responses or 'Quips' (full sentence or paragraph) for the user. The AI generates the Quips based on the conversational training used prior to initial use, including training based on the user's prior conversations in their messaging history. The quips user selects the appropriate quip using a pointing device or eye tracker and a text to speech engine reads the quip using the users own voice profile. This system allows the user to respond to conversation much more quickly than existing approaches. This allows a user who is unable to speak to join in with a conversation at a faster speed than using existing methods of text input.

The present disclosure provides a system that allows someone that cannot talk to communicate with people that can, using their own words and voice profile. To achieve this a unique combination of a Natural Language Processing (NLP) and a trained Artificial Intelligence (AI) Assistant was created. The AI is trained with the user's own conversation data e.g. their SMS history, messaging history, social media history or email history. NLP is used to understand 'incoming' conversation from someone that is speaking. This part of the conversation is transformed to text that is then routed into the pre-trained AI assistant. The assistant then uses contextual understanding of the incoming conversation to identify several appropriate responses or 'Quips' (full sentence or paragraph) for the user. The AI generates the Quips from its understanding of the users prior conversations in the their messaging history. The user finally selects the appropriate Quip using a pointing device or Eye tracker and a text to speech engine reads the Quip using the users own voice profile.

### Emotional classification

In a variation of the system described above, the phrases may be classified into a plurality of different emotional types.
- Convert the speech to text
- Pass the text through the 7 pre-trained "emotions" AI models, to generate 7 responses (each reflecting one emotion type, e.g. happy, sad, etc.). The models are Recurrent Neural Networks models that we trained on generic conversation data, and then fine-tuned on personal data.
- Rank the 7 responses (each model gives a confidence score along with the answer).

Present the User with the top ranked answers, each reflecting one emotion type.

In order to make a system that enables the user to join in naturally with a variety of conversations, the text phrases in the database were classified into a plurality of emotional classes, for example 7 emotional classes, it could be any number of emotions. The emotional classes may be for example Happy, Sad, Angry, Disgusted, Surprised, Bad, Fearful. By enabling a selection of phrases based on a user's emotions, the interface between the patient and the voice synthesizer is improved, helping to address the disabilities caused by their condition.

To classify text into emotions, a subset of the lines extracted from recordings were tagged into these e.g. 7 emotions (i.e. this conversation is sad, this is a happy conversation, etc.). Then, a deep learning model, for example Google^{®} BERT (a Bidirectional Encoder Transformer) was trained to classify conversations into one of these 7 emotions. The training could be arranged as an input to the deep learning model in the form of a manual classification of a sample of conversations into emotional categories, followed by reinforcement of the training. This enabled the system to sense whether topic conversation is sad, or happy, and therefore was able to provide more accurate/suitable responses to the MND patient.

Retaining the users personality, turn of phrase and emotions is a critical aspect of this device, that makes it usable as a permanent acceptable voice replacement for patients with MND or other conditions.

An optional feature is generating different quips responses for types of emotions. This system may have 7 different definitions of voice profile to accompany the different types of response. Therefore an emotional response may be played using an appropriate sounding voice profile.

Using previous conversation data the system is also able to filter conversations with particular people. This means that the system can speak to a loved one for example in a way which is different to say, a medical professional. The quips engine could actually therefore maintain even more of the patients personality in relation to who they are talking to. The user interface may therefore offer a selection to the user to select the person they are talking to, or the style of conversation to use, such as friendly, informal, official. The quips engine may also be trained to recognise the context of the conversation and adapt the choice of responses appropriately.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A device for generating conversational replies, comprising:
a processor with a memory;
a speech input module,
a user input module;
a natural language processing module including a plurality of sequence to sequence models;
the device being configured to:
record portions of a conversation through the speech input module,
use a speech recognition module to identify words in the conversation, and
when one or more words have been recognised:
generate more than one context sensitive responses based on the one or more words using the natural language processing module;
selecting a group of the context sensitive responses, and
prompt the user via the user input module to select a response from the group, output the selected response,
wherein generating one or more context sensitive responses includes generating a plurality of responses in different emotional categories using different sequence to sequence models of the plurality of sequence to sequence models,
each sequence to sequence model having been trained using a different training set, the different training sets having been categorised into emotional categories, and wherein selecting a group of context sensitive responses includes selecting a group of responses in different emotional categories.

2. The device of claim 1, wherein the speech input module comprises a sound transducer and the speech recognition module comprises a speech to text conversion module.

3. The device of claim 1, wherein the output module comprises a text to speech converter.

4. The device of claim 3, wherein the text to speech converter is configured to produce speech by generating phonetic data based on the selected phrase, which can be converted into audible speech by a speech generator with a voice profiler configured to apply modifications to the phonetic data so as to apply tone and cadre changes to the phonetic data to generate speech that sounds like the original voice of the user.

5. The device of any previous claim, wherein the user input module comprising a graphical user interface and a gaze tracking input, such that a user can select a response by gazing at a response displayed on the graphical user interface.

6. The use of the device of any previous claim for the alleviation of symptoms of motor neurone disease.

## Patentansprüche

1. Vorrichtung zum Generieren von konversationellen Antworten, umfassend:
einen Prozessor mit einem Speicher;
ein Spracheingabemodul,
ein Benutzereingabemodul;
ein Verarbeitungsmodul für natürliche Sprache, das eine Vielzahl von Sequenz-zu-Sequenz-Modellen einschließt;
wobei die Vorrichtung zu Folgendem konfiguriert ist:
Teile einer Konversation durch das Spracheingabemodul aufzuzeichnen, ein Spracherkennungsmodul zu verwenden, um Wörter in der Konversation zu identifizieren, und wenn ein oder mehrere Wörter erkannt wurden:
Generieren von mehr als einer kontextsensitiven Antwort basierend auf dem einen oder den mehreren Wörtern unter Verwendung des Moduls zur Verarbeitung natürlicher Sprache;
Auswählen einer Gruppe der kontextsensitiven Antworten, und
Auffordern des Benutzers über das Benutzereingabemodul, eine Antwort aus der Gruppe auszuwählen, die ausgewählte Antwort auszugeben,
wobei das Generieren einer oder mehrerer kontextsensitiver Antworten das Generieren einer Vielzahl von Antworten in unterschiedlichen emotionalen Kategorien unter Verwendung verschiedener Sequenz-zu-Sequenz-Modelle der Vielzahl von Sequenz-zu-Sequenz-Modellen einschließt, wobei jedes Sequenz-zu-Sequenz-Modell unter Verwendung eines verschiedenen Trainingssets trainiert wurde, wobei die unterschiedlichen Trainingssets in emotionale Kategorien kategorisiert wurden, und wobei das Auswählen einer Gruppe von kontextsensitiven Antworten das Auswählen einer Gruppe von Antworten in unterschiedlichen emotionalen Kategorien einschließt.

2. Vorrichtung nach Anspruch 1, wobei das Spracheingabemodul einen Schallwandler umfasst und das Spracherkennungsmodul ein Sprach-zu-Text-Umwandlungsmodul umfasst.

3. Vorrichtung nach Anspruch 1, wobei das Ausgabemodul einen Text-zu-Sprache-Umwandler umfasst.

4. Vorrichtung nach Anspruch 3, wobei der Text-zu-Sprache-Umwandler konfiguriert ist, um Sprache durch Generieren phonetischer Daten basierend auf der ausgewählten Phrase zu erzeugen, welche durch einen Sprachgenerator mit einem Stimmprofiler in hörbare Sprache umgewandelt werden können, der konfiguriert ist, um Modifikationen auf die phonetischen Daten anzuwenden, um Ton- und Kaderänderungen auf die phonetischen Daten anzuwenden, um Sprache zu generieren, die wie die ursprüngliche Stimme des Benutzers klingt.

5. Vorrichtung nach einem vorhergehenden Anspruch, wobei das Benutzereingabemodul eine grafische Benutzerschnittstelle und eine Blickverfolgungseingabe umfasst, so dass ein Benutzer eine Antwort durch Blicken auf eine Antwort auswählen kann, die auf der grafischen Benutzerschnittstelle angezeigt wird.

6. Verwendung der Vorrichtung nach einem vorhergehenden Anspruch zur Linderung von Symptomen einer Motoneuronerkrankung.

## Revendications

1. Dispositif destiné à la génération de réponses conversationnelles, comprenant :
un processeur avec une mémoire ;
un module d'entrée vocale,
un module d'entrée utilisateur ;
un module de traitement de langage naturel comprenant une pluralité de modèles de séquence à séquence ;
le dispositif étant configuré pour :
enregistrer des parties d'une conversation par l'intermédiaire du module d'entrée vocale, utiliser un module de reconnaissance vocale pour identifier des mots dans la conversation, et lorsqu'un ou plusieurs mots ont été reconnus :
générer plusieurs réponses sensibles au contexte sur la base du ou des mots à l'aide du module de traitement de langage naturel ;
sélectionner un groupe des réponses sensibles au contexte, et
inviter l'utilisateur par l'intermédiaire du module d'entrée utilisateur à sélectionner une réponse dans le groupe, délivrer en sortie la réponse sélectionnée,
ladite génération d'une ou plusieurs réponses sensibles au contexte comprenant la génération d'une pluralité de réponses dans différentes catégories émotionnelles à l'aide de différents modèles de séquence à séquence de la pluralité de modèles de séquence à séquence, chaque modèle de séquence à séquence ayant été entraîné à l'aide d'un ensemble d'entraînement différent, les différents ensembles d'entraînement ayant été catégorisés en catégories émotionnelles, et ladite sélection d'un groupe de réponses sensibles au contexte comprenant la sélection d'un groupe de réponses dans différentes catégories émotionnelles.

2. Dispositif de la revendication 1, ledit module d'entrée vocale comprenant un transducteur sonore et ledit module de reconnaissance vocale comprenant un module de conversion de parole en texte.

3. Dispositif de la revendication 1, ledit module de sortie comprenant un convertisseur de texte en parole.

4. Dispositif de la revendication 3, ledit convertisseur de texte en parole étant configuré pour produire de la parole en générant des données phonétiques sur la base de la phrase sélectionnée, qui peuvent être converties en parole audible par un générateur de parole avec un profileur vocal configuré pour appliquer des modifications aux données phonétiques de façon à appliquer des changements de tonalité et de cadre aux données phonétiques pour générer de la parole qui ressemble à la voix originale de l'utilisateur.

5. Dispositif d'une quelconque revendication précédente, ledit module d'entrée utilisateur comprenant une interface utilisateur graphique et une entrée de suivi de regard, de sorte qu'un utilisateur puisse sélectionner une réponse en regardant une réponse affichée sur l'interface utilisateur graphique.

6. Utilisation du dispositif d'une quelconque revendication précédente pour soulager les symptômes d'une maladie des motoneurones.
